Europäisches Patentamt

European Patent Office

Office européen des brevets

(11) Veröffentlichungsnummer: **0 019 235**

A1

(12) **EUROPÄISCHE PATENTANMELDUNG**

(21) Anmeldenummer: **80102584.2**

(22) Anmeldetag: **09.05.80**

(51) Int. Cl.³: **F 24 H 1/18**
F 24 J 3/04, F 24 J 3/00
F 25 D 21/00

(30) Priorität: **11.05.79 AT 3506/79**

(43) Veröffentlichungstag der Anmeldung:
**26.11.80 Patentblatt 80/24**

(84) Benannte Vertragsstaaten:
**CH DE FR LI SE**

(71) Anmelder: **Vereinigte Metallwerke Ranshofen-Berndorf AG**
**Wohllebengasse 9**
**A-1041 Wien IV(AT)**

(72) Erfinder: **Turnheim, Georg, Dr.**
**Sonnleithnergasse 43/36**
**A-1100 Wien(AT)**

(74) Vertreter: **Hain, Leonhard, Dipl.-Ing.**
**Tal 18/IV**
**D-8000 München 2(DE)**

(54) Langzeitwärmespeicher mit Aggregatzustandsumwandlung.

(57) Ein Langzeitwärmespeicher mit Aggregatzustandsumwandlung sieht einen Speicherbehälter (1), der mit Wasser gefüllt ist, vor. In den Boden (2) dieses Behälters ist ein Wärmetauscher (3) integriert, der mit einer Wärmepumpe (20) in Verbindung steht, so daß der Wärmetauscher den Verdampfer der Wärmepumpe bildet. Zum periodischen Abtauen der. auf dem Boden-Wärmetauscher (3) infolge fortgesetzten Wärmeentzugs sich bildenden Eisschicht ist ein Sonnenkollektor (25) angeschlossen und/oder die Wärmepumpe (20) ist umschaltbar. Zugleich dienen diese Einrichtungen zum Aufladen des Speichers. Der Wärmetauscher (3), der sich möglichst auf die gesamte Behälter-Bodenfläche erstreckt, ist zweckmäßig in mehrere aneinandergereihte Wärmetauscher aufgeteilt.

Fig. 3

H/m

Anmelder: Vereinigte Metallwerke Ranshofen-Berndorf AG
5282 Braunau am Inn, Oberösterreich

Titel: Langzeitwärmespeicher mit Aggregatzustandsumwandlung

## Beschreibung

Die Erfindung betrifft einen Langzeitwärmespeicher mit Aggregatzustandsumwandlung in Form eines Behälters oder Beckens, welcher das Speichermedium, wie insbesondere Wasser, enthält.

Um die Sonnenenergie zur Raumheizung nutzen zu können, ist eine Langzeitspeicherung der aufgenommenen Wärme notwendig. Bekannt sind große Wasserspeicher, Erd- und Schotterspeicher sowie Latentspeicher. Bei den Latentspeichern wird die Umwandlungswärme zwischen der festen und der flüssigen Phase des Speichermediums genutzt. Neben chemischen Latentspeichern sind auch sogenannte Eisspeicher bekannt, bei denen dann die Umwandlungsenergie zwischen dem festen Eis und dem flüssigen Wasser ausgenützt wird. Bei allen Latentspeichern stellt ein gleichmäßiger Wärmeentzug aus dem Speichervolumen sowie eine gleichmäßige Ladung des gesamten Speichers ein entscheidendes Problem dar.

Daher liegt der Erfindung die Aufgabe zugrunde, einen Langzeitwärmespeicher zu schaffen, der eine möglichst gleichmäßige Wärmeentnahme sowie eine gleichmäßige Ladung des gesamten Speichers gewährleistet.

Zur Lösung dieser Aufgabe ist ein Wärmespeicher der eingangs genannten Art dadurch gekennzeichnet, daß in seinen Boden Wärmetauscher integriert sind, welche mit einer Wärmepumpe zur Wärmeentladung bzw. -Ladung in Verbindung stehen.

Durch den Wärmeentzug am Boden eines kubischen oder zylindrischen Speicherbehälters mittels des Wärmetauschers, der in Verbindung mit einer Wärmepumpe deren Verdampfer bildet, wird das Behälterwasser abgekühlt, und es entsteht schließlich eine Eisschicht auf dem Wärmetauscher, die durch kurzzeitiges Abtauen die Möglichkeit hat, im Speicherbehälter hochzuschwimmen. Eine Wiederholung dieses Zyklusses ermöglicht eine gleichmäßige Entladung des Speichers. Durch Sonnenkollektoren oder Umgebungswärme kann dieser Speicher wieder geladen werden, wenn die schwimmende Eisschicht geschmolzen wird. Dieser Abschmelzprozeß entsteht durch natürliche Konvektion des aufsteigenden wärmeren Wassers. Wenn die Wärmezufuhr durch Sonnenkollektoren erfolgt, so können diese mit einer Arbeitstemperatur von ca. 10°C betrieben werden, wodurch übliche Flachkollektoren einen sehr hohen Wirkungsgrad erreichen.

Als besonders vorteilhaft hat sich erwiesen, den Boden des Speicherbehälters in mehrere Teil-Wärmetauscher aufzuteilen und den Abtauprozeß der sich darauf gebildeten Eisschicht abschnittsweise durchzuführen. Damit soll ein schnelles Aufschwimmen einzelner Eisplatten ermöglicht werden.

Erfindungsgemäß wird weiterhin vorgeschlagen, den Wärmetauscher entweder als Flachwärmetauscher oder in Form einer Rohrschlange ähnlich wie bei einer Fußbodenheizung verlegt auszubilden.

Besonders vorteilhaft ist es, ein insbesondere im Freien stehendes Schwimmbecken als Latenteisspeicher zu verwenden, dessen Bodenkonstruktion erfindungsgemäß als Verdampferplatte einer Wärmepumpe ausgebildet ist. Ein solches Speicherbecken kann im Sommer zum Schwimmen und im Winter als Eisspeicher für das Raumheizungssystem dienen.

Erfindungsgemäß können die Verdampfer- bzw. Wärmetauscherplatten des Speichers entweder direkt an die Wärmepumpe angeschlossen sein oder über einen Solekreislauf ihre Energie der Wärmepumpe zur Verfügung stellen.

Die Erfindung wird nachfolgend anhand eines Ausführungsbeispieles, das auch in der Zeichnung schematisiert dargestellt ist, näher beschrieben. Es zeigen:

Fig. 1   eine perspektivische Ansicht eines Speicherbeckens,
Fig. 2   eine Ansicht eines anderen Beckens und
Fig. 3   eine Schemadarstellung.

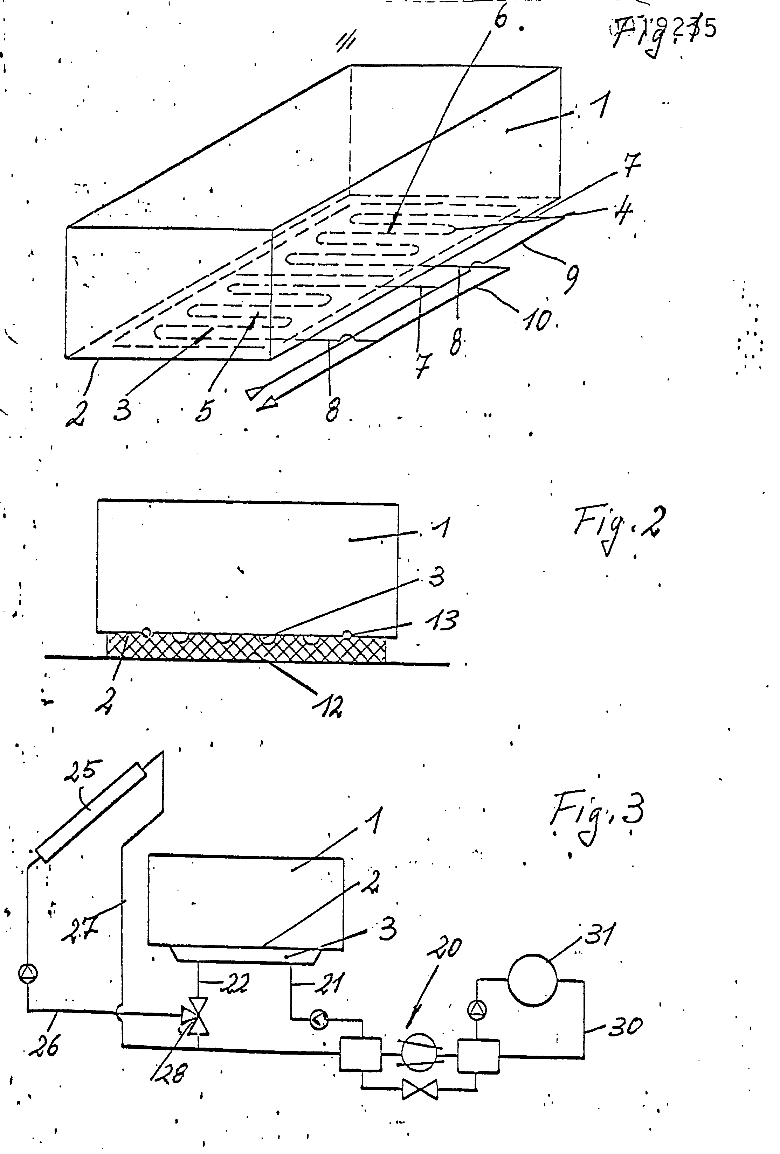

In einem Wasserbehälter 1, beispielsweise in Form eines Quaders, ist ein Behälterboden 2 als Wärmetauscher 3 ausgebildet. Beim Ausführungsbeispiel wird dieser Wärmetauscher von schlangenförmig verlegten Leitungsrohren 4 gebildet, die gemäß Fig. 2 auch halbkreisförmigen Querschnitt aufweisen können. Im Ausführungsbeispiel sind zwei Teil-Wärmetauscher 5, 6 aneinandergereiht. Durch die Zuleitungen 7 und die Ableitungen 8 stehen diese Wärmetauscher über die Hauptleitungen 9 bzw. 10 mit einer Wärmepumpe 20 (Fig. 3) in Verbindung. Die Wärmetauscher 5, 6 bilden auf diese Weise den Verdampfer der Wärmepumpe.

Aus Fig. 2 ist zu sehen, daß die Wärmetauscher in Form von halbkreisförmigen Leitungsrohren zum Teil in eine Bodenisolierung 12 des Behälters eingebettet sind. Mit 13 ist eine Verbindungskette zum Wasserbeckenboden bezeichnet.

Fig. 3 zeigt einen Wasserbehälter 1 mit einem an seinem Boden 2 angebrachten Wärmetauscher 3 als Verdampfer der mittels der Leitungen 21 und 22 damit verbundenen Wärmepumpe 20. Ebenfalls an die Wärmepumpe bzw. deren Zuleitungen angeschlossen ist ein Sonnenkollektor 25, dessen Anschlußleitungen 26, 27 mit den Zuleitungen zum Wärmetauscher bzw. der Wärmepumpe in Verbindung stehen. Ein Dreiwegeventil ist mit 28 bezeichnet. Die Wärmepumpe speist andererseits eine Umlaufheizung 30 mit den Heizkörpern 31.

Entzieht nun die Wärmepumpe 20 über den im Boden des Wasserbehälters 1 ausgebildeten Verdampfer 3 Wärme, so wird das Speicherwasser abgekühlt und schließlich bildet sich auf dem Verdampfer Eis. Um diese Eisschicht vom Verdampfer zu lösen, muß sie abgetaut werden, was am besten durch Einleitung von aus einem angeschlossenen Sonnenkollektor erwärmten Umlaufwasser in den Verdampfer geschieht. Hierbei kann zugleich auch das Speicherwasser erwärmt und dadurch die oben schwimmende Eisschicht geschmolzen werden. Ist der Verdampfer in zwei oder mehrere Teilverdampfer 5, 6 unterteilt, kann das Abtauen abschnittsweise ausgeführt werden.

- 5.

Anmelder: Vereinigte Metallwerke Ranshofen-Berndorf AG
5282 Braunau am Inn, Oberösterreich

Titel: Langzeitwärmespeicher mit Aggregatzustandsumwandlung

Patentansprüche

1. Langzeitwärmespeicher mit Aggregatzustandsumwandlung in Form eines Behälters (1) oder Beckens, welcher das Speichermedium, insbesondere Wasser, enthält, dadurch gekennzeichnet, daß in dessen Boden (2) Wärmetauscher (3) integriert sind, welche mit einer Wärmepumpe (20) zur Wärmeentladung bzw. -ladung des Behälters (1) in Verbindung stehen.

2. Langzeitwärmespeicher nach Anspruch 1, dadurch gekennzeichnet, daß der Wärmetauscher (20) mit einem Sonnenkollektor (25) in Verbindung steht.

3. Langzeitwärmespeicher nach Anspruch 1 oder 2, dadurch gekennzeichnet, daß der Wärmetauscher (3) als Flachwärmetauscher ausgebildet ist.

4. Langzeitwärmespeicher nach Anspruch 1 oder 2, dadurch gekennzeichnet, daß der Wärmetauscher (3) von einer Rohrschlange (4) gebildet ist.

5. Langzeitwärmespeicher nach einem der Ansprüche 1 bis 4, dadurch gekennzeichnet, daß der Wärmetauscher (3) in Teil-Wärmetauscher (5, 6) aufgeteilt ist und jeder Teil getrennte Leitungsanschlüsse (7, 8) aufweist.

6. Langzeitwärmespeicher nach einem der Ansprüche 1 bis 5, dadurch gekennzeichnet, daß die Wärmepumpe (20) zum Abtauen einer Eisschicht vom Wärmetauscher (3) umschaltbar ist.

- 6

7. Langzeitwärmespeicher nach einem der Ansprüche 1 bis 6, dadurch gekennzeichnet, daß die Wärmepumpe (20) über einen Solekreislauf mit dem Wärmetauscher (3) in Verbindung steht.

8. Langzeitwärmespeicher nach einem der Ansprüche 1 bis 7, dadurch gekennzeichnet, daß der Wasserbehälter (1) ein im Freien errichtetes Schwimmbecken ist.

Fig. 1

Fig. 2

Fig. 3

# EUROPÄISCHER RECHERCHENBERICHT

**Europäisches Patentamt**

Nummer der Anmeldung

EP 80 10 2584.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 648 699 (R. SASSE) <br> * ganzes Dokument * <br> -- | 1,2,4, 5,7 |
| | DE - A1 - 2 744 618 (COMPAGNIE POUR L'ETUDE ET LA REALISATION DE COMBUSTIBLES ATOMIQUES) <br> * Seite 12, Absatz 4 bis Seite 13, Absatz 1, Seite 13, Absatz 5; Fig. 1 und 7 * <br> -- | 1,2, 4,7 |
| | DE - A1 - 2 846 797 (AB SVENSKA FLÄKT-FABRIKEN) <br> * ganzes Dokument * <br> -- | 1,2 |
| | DE - A1 - 2 746 908 (CARRIER CORP.) <br> * Seite 8, Absatz 3 bis Seite 9, Absatz 1 * <br> ---- | 6 |

**KLASSIFIKATION DER ANMELDUNG (Int.Cl.³)**

F 24 H 1/18
F 24 J 3/04
F 24 J 3/00
F 25 D 21/00

**RECHERCHIERTE SACHGEBIETE (Int. Cl.³)**

F 24 D 11/02
F 24 H 1/00
F 24 J 3/00
F 25 D 21/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 25-07-1980 | PIEPER |

EPA form 1503.1 06.78